(19) Europäisches Patentamt
European Patent Office
Office européen des brevets

(11) EP 2 772 519 A1

(12) # EUROPEAN PATENT APPLICATION
published in accordance with Art. 153(4) EPC

(43) Date of publication:
**03.09.2014 Bulletin 2014/36**

(21) Application number: **12844144.1**

(22) Date of filing: **26.10.2012**

(51) Int Cl.:
***C09D 11/00*** *(2014.01)* ***B41J 2/01*** *(2006.01)*
***B41M 5/00*** *(2006.01)*

(86) International application number:
**PCT/JP2012/077734**

(87) International publication number:
**WO 2013/062090 (02.05.2013 Gazette 2013/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2011 JP 2011236057**

(71) Applicants:
- **DIC Corporation**
  **Tokyo 174-8520 (JP)**
- **DIC Graphics Corporation**
  **Tokyo 103-8233 (JP)**

(72) Inventors:
- **YAMADA Tomokazu**
  **Kitaadachi-gun**
  **Saitama 362-8577 (JP)**
- **CHISAKA Yuichi**
  **Kitaadachi-gun**
  **Saitama 362-8577 (JP)**
- **KAWAI Kazunari**
  **Kitaadachi-gun**
  **Saitama 362-8577 (JP)**
- **KIUCHI Yoshitaka**
  **Kitaadachi-gun**
  **Saitama 362-8577 (JP)**

(74) Representative: **Albrecht, Thomas**
**Kraus & Weisert**
**Patentanwälte PartGmbB**
**Thomas-Wimmer-Ring 15**
**80539 München (DE)**

(54) **INK FOR ACTIVE ENERGY RAY-CURABLE INKJET RECORDING**

(57) Provided is an active-energy-radiation-curable inkjet recording ink that experiences reduced repulsion when ejected onto nonabsorbent substrates, that has good curability, and that causes little color mixing between uncured coatings formed adjacent to each other by ejecting inks and can thus form fine images on nonabsorbent substrates. The present invention provides an active-energy-radiation-curable inkjet recording ink containing a pigment, a silicone acrylate, an active-energy-radiation-curable compound other than the silicone acrylate, and a radical polymerization initiator. The silicone acrylate is a particular organically modified silicone acrylate including a side chain containing a polyoxyalkylene having a (meth)acryloyl group at an end thereof. The active-energy-radiation-curable compound is a compound (E) having a (meth)acryloyl group and a vinyl ether group.



Printed by Jouve, 75001 PARIS (FR)

## Description

Technical Field

The present invention relates to active-energy-radiation-curable inkjet recording inks that are ejected onto recording media and are then irradiated with active energy radiations such as ultraviolet rays, electron beams, and radioactive rays to form a cured coating.

Background Art

Inkjet printing has been widely used, mainly in offices and homes, because inkjet printers are inexpensive and easy to miniaturize and require no complicated maintenance or adjustment. Recently, organic pigments, as well as dyes, have been frequently used as colorants in inkjet inks for improved water resistance and long-term image storage stability. Inkjet printers themselves have also been improved in terms of high-speed printing and long-term ejection stability, thereby expanding the range of applications of inkjet recording in industry.
For industrial applications, inkjet recording is essentially advantageous in terms of the lead time and cost of printing because it allows images to be formed on recording media without contact therewith and requires no printing plate to be manufactured as in conventional printing processes. To exploit this advantage for smooth replacement of conventional printing processes using printing plates, inkjet recording needs to be further improved to be completely comparable in terms of print image quality to conventional printing processes. Accordingly, there is an immediate need for further improvement in image quality.
Recently, aqueous inkjet recording, organic-solvent-based inkjet recording, and active-energy-radiation-curable inkjet recording have been developed and used for printing in industrial applications, depending on the properties of recording media. Among these types of recording, aqueous inkjet recording and active-energy-radiation-curable inkjet recording, in which volatilization of organic solvents during printing can be ignored, are advantageous for reduced environmental impact. In particular, active-energy-radiation-curable inkjet recording, which uses active-energy-radiation-curable inks, is advantageous for printing on nonabsorbent media, such as films, in terms of the curing rate, coating formability on media, and adhesion of printed coatings.
In image formation on nonabsorbent media using inkjet recording in the related art, repulsion of ejected ink and color mixing between inks are common problems irrespective of the type of inkjet recording because it uses inks with low viscosity. In active-energy-radiation-curable inkjet recording, in which a coating of ejected ink is cured by irradiation with active energy radiation, color mixing can be significantly reduced by performing irradiation with active energy radiation immediately after each ink is ejected.
However, the repulsion of ejected ink itself on nonabsorbent media remains a problem to be solved for active-energy-radiation-curable inks, as for inkjet recording using aqueous and organic-solvent-based inks. Even if color mixing between active-energy-radiation-curable inks can be prevented by performing irradiation with active energy radiation immediately after each ink is ejected, a new problem occurs in that repulsion on both a nonabsorbent medium and a cured coating of an ink ejected onto the medium needs to be reduced because there are some regions where other inks are applied to the cured coating of the ink. In addition, even if color mixing is reduced, the need to cure the active-energy-radiation-curable inks by performing irradiation with active energy radiation after each ink is ejected tends to result in considerably low printing speed unless they have extremely high curability, and could therefore be a major obstacle to high-speed printing.
To solve the above problems, the following improvements have been made to active-energy-radiation-curable inkjet recording inks. Specifically, photocurable inks have been proposed that contain allyl glycol as a polymerizable compound and a polyether-modified silicone oil with an HLB of 4 to 10.5 as a surfactant to improve the wettability on the surface of nonabsorbent media, to prevent repulsion of the inks in the interface, and to prevent bleeding when the inks are applied on top of each other (see PTL 1). These inks, however, cannot completely solve the problem of color mixing, and color mixing regions between adjacent coatings occur and spread over time. Furthermore, the ink formulations used do not necessarily have good curability, which promotes color mixing.
In an ink set including active-energy-radiation-curable inks containing cyan, magenta, yellow, and black colorants, a thioxanthone photoinitiator is added to the active-light-curable ink compositions containing yellow and black colorants, and no thioxanthone photoinitiator is added to the active-light-curable ink compositions containing cyan and magenta colorants. This is intended to compensate for the difference in curing rate due to light absorption of the colorants to simultaneously cure the active-light-curable ink compositions, thereby preventing color mixing (see PTL 2). This technique, however, basically cannot effectively reduce color mixing that occurs when the active-energy-radiation-curable inks come into contact with each other before irradiation with active energy radiation.
Accordingly, there is a need for the development of an active-energy-radiation-curable inkjet recording ink that basically experiences little repulsion when ejected onto nonabsorbent media or cured coatings of inks of other colors,

that has good curability to prevent color mixing and to allow high-speed printing, and that basically causes little color mixing when coatings of different inks come into contact with each other in an uncured state and can thus form high-quality images. Such inks could be simultaneously irradiated with active energy radiation after they are ejected onto recording media without the need to perform irradiation with active energy radiation immediately after each ink is ejected. This could increase the energy efficiency, simplify the structure, and increase the speed of printing apparatuses themselves.

Silicone acrylates may be used as surface tension modifiers in active-energy-radiation-curable inkjet recording inks (PTL 3) and may be listed together with other silicone compounds and fluorinated compounds (PTL 4); however, there has been no discussion of the effect of reducing color mixing as discussed in the present application, and there has been no known method of use for maximizing this effect as in the present invention.

PTL 1: Japanese Unexamined Patent Application Publication No. 2010-202814
PTL 2: Japanese Unexamined Patent Application Publication No. 2010-138315
PTL 3: Japanese Unexamined Patent Application Publication No. 2006-008998
PTL 4: Japanese Unexamined Patent Application Publication No. 2011-057744

Summary of Invention

Technical Problem

An object of the present invention is to provide an active-energy-radiation-curable inkjet recording ink that experiences reduced repulsion when applied to nonabsorbent substrates or cured coatings of active-energy-radiation-curable inks, that has good curability, and that causes little color mixing between uncured coatings formed adjacent to each other by ejecting inks and can thus form fine images on nonabsorbent substrates.

Solution to Problem

The inventors have found that the use of an organically modified silicone acrylate having a particular structure in an active-energy-radiation-curable ink can reduce repulsion when the ink is ejected onto nonabsorbent substrates or is applied to cured coatings of active-energy-radiation-curable inks and can also effectively reduce color mixing between adjacent uncured coatings. The inventors have also found that the use of a monomer having a particular structure as a polymerizable monomer improves the curability and thus reduces the time to cure completely, thereby further reducing color mixing. These findings have led to the present invention.

Specifically, the present invention provides an active-energy-radiation-curable inkjet recording ink containing a pigment (A), an organically modified silicone acrylate (B), an active-energy-radiation-curable compound (C) other than the silicone acrylate, and a radical polymerization initiator (D). The organically modified silicone acrylate (B) includes a main chain having a polydimethylsiloxane structure and a side chain containing a polyoxyalkylene having a (meth)acryloyl group at an end thereof. The active-energy-radiation-curable compound (C) is a compound (E) having a (meth)acryloyl group and a vinyl ether group.

Because the active-energy-radiation-curable inkjet recording ink according to the present invention contains a silicone acrylate having a particular structure, the ink experiences reduced repulsion on nonabsorbent media or cured coatings of active-energy-radiation-curable inks and also causes little color mixing between uncured coatings formed adjacent to each other on nonabsorbent media. Thus, even if droplets previously ejected onto nonabsorbent media or coatings formed by the droplets remain uncured when droplets of second and third inks of other colors are ejected adjacent to the previously ejected droplets or coatings, these droplets or coatings are not mixed together before curing by simultaneous irradiation and thus do not blur the image. In addition, because the active-energy-radiation-curable inkjet recording ink contains the compound (E) having both a (meth)acryloyl group and a vinyl ether group, which is a polymerizable monomer having good surface curability, the entire ink cures quickly with a low level of active energy radiation to form a robust coating after irradiation. Such quick curing with active energy radiation more effectively prevents color mixing between ejected inks. Thus, irradiation with active energy radiation, which is normally performed immediately after each ink is ejected to prevent color mixing, can be simultaneously performed after a certain image is formed by sequentially ejecting inks of multiple colors to simultaneously cure the inks. This allows high-speed image formation using active-energy-radiation-curable inkjet recording inks.

For example, for high-speed printing, the active-energy-radiation-curable inkjet recording ink can be applied to methods for forming images in which, while moving a recording medium, inks of different colors are printed using a plurality of fixed heads having a width equal to the overall width of the recording medium and are simultaneously irradiated with active energy radiation from a light source disposed downstream of the recording medium and having a width equal to the overall width of the recording medium. Advantageous Effects of Invention

Because the active-energy-radiation-curable inkjet recording ink according to the present invention contains a silicone acrylate having a particular structure, the ink experiences extremely little repulsion when ejected onto nonabsorbent media or applied to coatings formed thereon and also causes extremely little color mixing between uncured coatings formed by ejected inks. In addition, because the active-energy-radiation-curable inkjet recording ink has good curability, it cures quickly after irradiation with active energy radiation and thus more reliably prevents color mixing, and also causes little bleeding at the boundaries between dots of different colors during image formation and can thus form fine images.

Brief Description of Drawings

[Fig. 1] Fig. 1 is an illustration of a method for desktop evaluation of color mixing.

Description of Embodiments

An active-energy-radiation-curable inkjet recording ink according to the present invention contains a pigment, an organically modified silicone acrylate having a particular structure, a polymerizable monomer other than the silicone acrylate, and a radical polymerization initiator. The organically modified silicone acrylate includes a polyoxyalkylene chain having a (meth)acryloyl group at an end thereof. The polymerizable monomer is a compound (E) having both a (meth)acryloyl group and a vinyl ether group.

Unlike other silicone compounds, which have a surface adjustment function, the silicone acrylate used in the present invention, including a side chain containing an acrylate functional group, undergoes a curing reaction with the organically modified silicone acrylate itself and with the other active-energy-radiation-curable compound (C) during the polymerization reaction of the other active-energy-radiation-curable compound (C). Therefore, the silicone acrylate does not decrease the curability of an ink coating and does not bleed out after adhesion as other silicone compounds do. The silicone acrylate also hardens a polymerized coating, thus forming a coating with superior adhesion to recording media and abrasion resistance.

The organically modified silicone acrylate is a compound including a main chain of linear dimethylpolysiloxane and a side chain containing an acrylate functional group. The properties of the organically modified silicone acrylate, including the length of the polysiloxane main chain, the type of side chain containing an acrylate functional group, and the number of side chains introduced, can be adjusted to provide an inkjet ink with properties such as suitable surface tension and good adhesion depending on the type of recording media. The organically modified silicone acrylate used in the present invention preferably has a molecular weight of 500 to 20,000, more preferably 1,000 to 10,000. The organically modified silicone acrylate (B) is used in the present invention to adjust the leveling of droplets of the active-energy-radiation-curable ink ejected onto nonabsorbent substrates or coatings formed by the droplets, to reduce repulsion, and to reduce color mixing with adjacent droplets or coatings of other colors. The organically modified silicone acrylate (B) includes a main chain having a polydimethylsiloxane structure and a side chain containing a polyoxyalkylene having a (meth)acryloyl group at an end thereof.

The polyoxyalkylene in the side chain is preferably a copolymer of ethylene oxide and propylene oxide, more preferably one including only ethylene oxide units, for reduced color mixing.

Specifically, the organically modified silicone acrylate that can be used in the present invention may be a compound having the structure represented by general formula (1):

[Chem. 1]

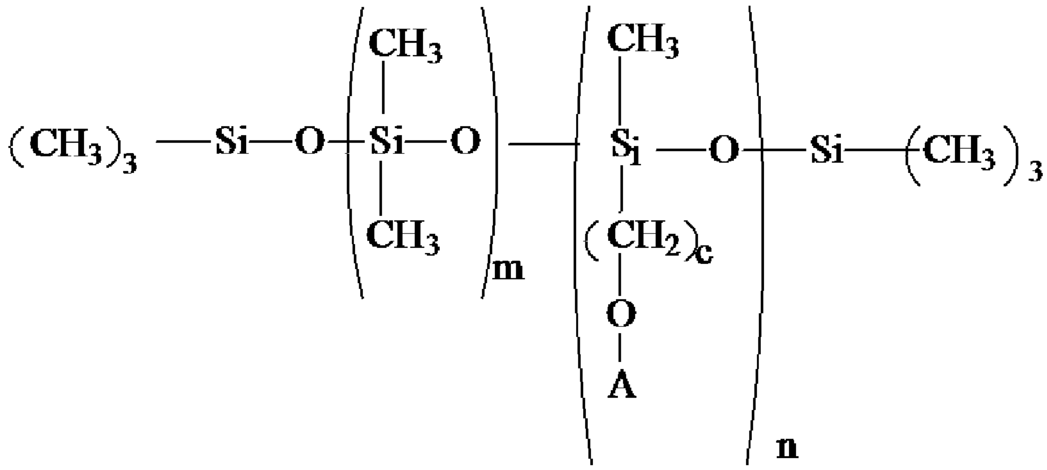

(1)

(where A is a polyoxyalkylene group having a (meth)acryloyl group at an end thereof; one or some of the polyoxyalkylene groups may have hydroxyl groups at the ends thereof instead of the (meth)acryloyl groups; c is an integer of 0 to 5; and m and n are integers of 1 or more).

The modification rate in general formula (1) is preferably 3% to 20%, more preferably 5% to 20%. The modification rate as used herein is calculated by (n/(m+n)) x 100 (%).

The number of oxyalkylene units attached is preferably 5 to 25, more preferably 8 to 20, even more preferably 10 to 15.

More specifically, while the modification rate of the silicone acrylate represented by general formula (1) above falls within the above preferred range, m is preferably 15 to 30, more preferably 18 to 28, even more preferably 20 to 26, most preferably 22 to 25, in terms of the function of reducing color mixing on nonabsorbent media.

In addition, n is preferably 1 to 4, more preferably 1 to 3.

Furthermore, c is preferably 1 to 4, more preferably 3.

If A having a polyoxyalkylene group in general formula (1) has a (meth)acryloyl group at an end thereof, it may be a polyoxyalkylene group, having a (meth)acryloyl group at an end thereof, represented by general formula (2):

[Chem. 2]

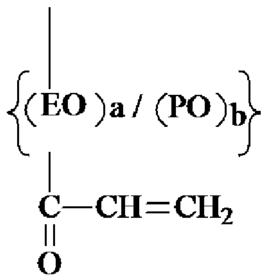

(2)

(where a is an integer of 8 to 18, and b is an integer of 0 to 5).

Preferably, a is 8 to 20, more preferably 10 to 16, even more preferably 12 to 15, most preferably 13 to 14.

In addition, b is preferably 0 to 3, more preferably 0.

Examples of organically modified silicone acrylates that satisfy the above conditions include Tego Rad 2300

(available from Degussa) (10 to 15 ethylene oxide units added, modification rate: 5 to 15, molecular weight: 2,000 to 4,500), Tego Rad 2200N (available from Degussa) (total of 15 to 25 ethylene oxide and propylene oxide units added, modification rate: 10 to 20, molecular weight: 2,000 to 4,500), Tego Rad 2250 (available from Degussa) (total of 10 to 20 ethylene oxide and propylene oxide units added, modification rate: 10 to 20, molecular weight: 1,500 to 4,000), and Tego Rad 2010 (Degussa).

For example, a compound represented by general formula (1) may be used as the organically modified silicone acrylate (B), and the length of the polysiloxane chain and the type and degree of organic modification may be adjusted to adjust the repulsion of the active-energy-radiation-curable inkjet recording ink on nonabsorbent media, the leveling of ejected ink, and the degree of the function of reducing color mixing with inks of other colors ejected adjacent to each other.

For example, if m, n, a, b, and c in general formula (1) above fall within the respective specified ranges, an active-energy-radiation-curable inkjet recording ink containing such a silicone acrylate is better in terms of the balance between the repulsion of droplets of the ink ejected onto nonabsorbent media, the leveling of the coating formed by the droplets, and the reduction in color mixing between coatings formed by droplets of inks ejected adjacent to each other. Therefore, such an inkjet recording ink causes no color mixing when applied to or adjacent to droplets or coatings of inkjet recording inks before curing by irradiation with active energy radiation. In addition, because the inkjet recording ink has moderate leveling properties, less graininess remains when images are formed, and less uncoated area occurs in lines when solid images are printed.

Because the organically modified silicone acrylate (B) used in the present invention basically has a superior function of reducing color mixing of the active-energy-radiation-curable ink, it tends to decrease the leveling when added.

Accordingly, to reduce color mixing while maintaining good leveling of ejected active-energy-radiation-curable ink, it is preferred to use in combination an organically modified silicone acrylate (F) having better leveling properties than the organically modified silicone acrylate (B), which includes a side chain containing a polyoxyalkylene group, particularly, one having good leveling properties on film substrates. These two organically modified silicone acrylates can be compared for leveling properties by measuring how widely droplets of equal volume deposited on film substrates spread in a predetermined period of time. For example, for high-speed printing, the active-energy-radiation-curable inkjet recording ink can be applied to methods for forming images in which, while moving a recording medium, inks of different colors are printed using a plurality of fixed heads having a width equal to the overall width of the recording medium and are simultaneously irradiated with active energy radiation from a light source disposed downstream of the recording medium and having a width equal to the overall width of the recording medium.

The organically modified silicone acrylate (F) may be a silicone acrylate including a main chain having a polydimethylsiloxane structure and a side chain having a total of 2 to 10 carbon atoms and containing an alkyl group that is optionally substituted by a hydroxyl group and that has a (meth)acryloyl group attached at an end thereof.

The organically modified silicone acrylate (F) may be selected from compounds having the structure represented by general formula (3):

[Chem. 3]

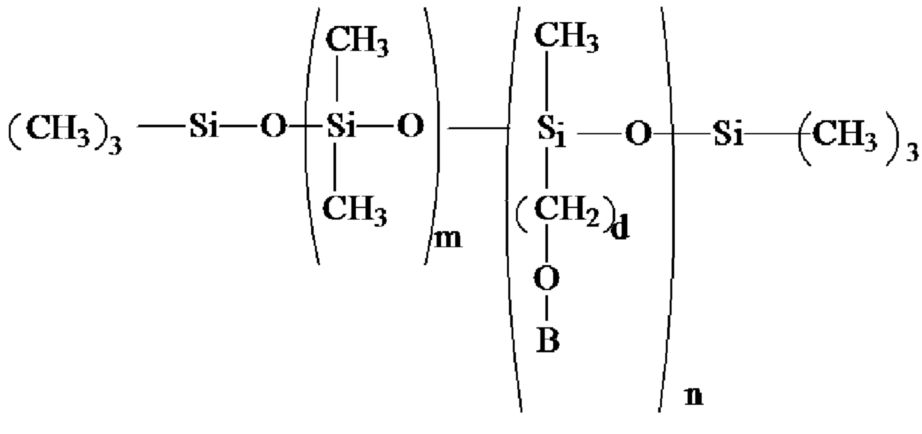

(3)

(where B is an alkyl group that has 2 to 6 carbon atoms, that is optionally substituted by a hydroxyl group, and that has a (meth)acryloyl group at an end thereof; d is an integer of 0 to 5; and p and q are integers of 1 or more).

The modification rate in general formula (3) is preferably 15% to 50%, more preferably 20% to 40%. The

modification rate as used herein is calculated by (q/(p+q)) x 100 (%).

In terms of the function of imparting leveling properties to the active-energy-radiation-curable ink, d is preferably 1 to 4, more preferably 3.

More specifically, while the modification rate falls within the above range, p is preferably 11 to 17, more preferably 12 to 15, even more preferably 13 to 15. In addition, q is preferably 4 to 8, more preferably 5 to 7, even more preferably 6.

Alternatively, compounds may be used in which P in general formula (3) has a structure formed by ring-opening addition of a glycidyl group with acrylic acid or methacrylic acid. Such compounds may have one or some Ps to which no acrylic acid or methacrylic acid is added.

Examples of preferred organically modified silicone acrylates that satisfy the above conditions include Tego Rad 2100 (available from Degussa) (having side chains containing a glycidyl group to which acrylic acid is added, modification rate: 20 to 40, molecular weight: 1,500 to 3,500).

The use of the organically modified silicone acrylate (B) in combination with the organically modified silicone acrylate (F), along with the above adjustments, further expands the range and flexibility of adjustment of the repulsion of the active-energy-radiation-curable inkjet recording ink on nonabsorbent media, the leveling thereof, and the degree of reduction in color mixing between uncured coatings.

The organically modified silicone acrylate (F) has a superior function of imparting leveling properties as compared to the organically modified silicone acrylate (B). Thus, while the organically modified silicone acrylate (B) can basically be used to reduce color mixing between ejected inks adjacent to each other, the organically modified silicone acrylate (F), which has better leveling properties, can be added to prevent repulsion of ejected ink on nonabsorbent media and cured coatings of active-energy-radiation-curable inks and to ensure sufficient leveling properties.

The total content of these organically modified silicone acrylates in the active-energy-radiation-curable ink is preferably 0.1% to 1% by mass. If the content of the organically modified silicone acrylates in the ink composition is less than 0.1% by mass, the functions of the organically modified silicone acrylates, including the reduction in color mixing and the leveling of ejected ink, tend not to be effective. If the content of the organically modified silicone acrylates is more than 1% by mass, they would not have any greater effect, but conversely could cause problems such as increased viscosity. The proportions of the organically modified silicone acrylate (B) and the organically modified silicone acrylate (F) may be adjusted depending on the method for forming images using the active-energy-radiation-curable inkjet recording ink. For example, if the active-energy-radiation-curable inkjet recording ink is used with recording media on which or methods for forming images in which droplets tend to be applied on top of each other, the proportion of the organically modified silicone acrylate (B) may be increased to more effectively reduce color mixing. If the time that elapses from ejection of the ink until irradiation with active energy radiation is shortened, for example, for high-speed printing, the proportion of the organically modified silicone acrylate (F) may be increased to improve the leveling properties and thereby compensate for the short leveling time.

Typical active-energy-radiation-curable compounds include radical-polymerizable compounds and cation-polymerizable compounds, which differ in terms of reaction mechanism. To provide an ink with high curing and drying rate, radical-polymerizable compounds having an ethylenic double bond, such as (meth)acrylates, are preferably used as the active-energy-radiation-curable compound other than the silicone acrylates in the present invention.

The active-energy-radiation-curable compound (C) used in the present invention is a compound (E) having both a (meth)acryloyl group and a vinyl ether group. The compound (E) has low viscosity and little odor and skin irritation, and also has high sensitivity and shows low inhibition of polymerization due to oxygen. Thus, the compound (E) provides high curability for thin films and good abrasion resistance and adhesion for cured coatings, particularly, high adhesion to plastics and films.

The good curability of the compound (E) shortens the time for the ink to flow between adjacent uncured coatings and thus further improves the effect of reducing color mixing provided by the organically modified silicone acrylates used in the present invention.

The compound (E) having both a (meth)acryloyl group and a vinyl ether group used in the present invention may be a compound represented by general formula (4):

[Chem. 4]

$$CH_2=CR^1\text{-}COO\text{-}R^2\text{-}O\text{-}CH=CH\text{-}R^3 \qquad (4)$$

(where $R^1$ is a hydrogen atom or a methyl group, $R^2$ is an organic residue having 2 to 20 carbon atoms, and $R^3$ is a hydrogen atom or an organic residue having 1 to 11 carbon atoms).

$R^3$ is preferably a hydrogen atom, and $R^2$ is preferably an alkylene group having 2 to 6 carbon atoms or an alkylene group having 2 to 9 carbon atoms and having an oxygen atom as an ether bond in the structure thereof.

Preferably, the compound (E) is 2-(2-vinyloxyethoxy)ethyl (meth)acrylate.

The compound (E) having a (meth)acryloyl group and a vinyl ether group is preferably added in an amount of 25% to 50% by mass of the total amount of polymerizable compounds in the ink.

Examples of active-energy-radiation-curable compounds other than the silicone acrylates and the compound (E) used in the present invention specifically include active-energy-radiation-curable monomers such as monofunctional monomers having one ethylenic double bond, polyfunctional monomers having two ethylenic double bonds (i.e., difunctional monomers), and polyfunctional monomers having three or more ethylenic double bonds; and active-energy-radiation-curable oligomers such as (meth)acrylate oligomers. These may be used in a combination of two or more.

While using monofunctional active-energy-radiation-curable compounds in smaller amounts, polyfunctional active-energy-radiation-curable compounds, particularly trifunctional or higher-functional active-energy-radiation-curable compounds, and (meth)acrylate oligomers may be used in larger amounts to form a cured coating with a higher crosslink density. This improves the curability and thus provides sufficient durability for the cured coating. These compounds, however, have high viscosity, and particularly, (meth)acrylate oligomers have higher viscosities than monomers; therefore, they are preferably used in an amount of 2% to 20% by mass of the total amount of compounds having an ethylenic double bond. The contents of active-energy-radiation-curable compounds, such as polyfunctional active-energy-radiation-curable compounds, monofunctional active-energy-radiation-curable compounds, and (meth)acrylate oligomers, in the active-energy-radiation-curable inkjet recording ink according to the present invention may be controlled to provide good curability and sufficient durability for cured coatings without a decrease in the flexibility of the cured coatings or a decrease in the ejectability of the inkjet ink due to increased viscosity.

Examples of polyfunctional active-energy-radiation-curable compounds include, but not limited to, di(meth)acrylates of compounds such as 1,3-butylene glycol, 1,4-butanediol, 1,5-pentanediol, 3-methyl-1,5-pentanediol, 1,6-hexanediol, neopentyl glycol, 1,8-octanediol, 1,9-nonanediol, tricyclodecane dimethanol, ethylene glycol, polyethylene glycol, propylene glycol, dipropylene glycol, tripropylene glycol, and polypropylene glycol; di(meth)acrylates of tris(2-hydroxyethyl) isocyanurate; di(meth)acrylates of diols prepared by adding 4 mol or more of ethylene oxide or propylene oxide to 1 mol of neopentyl glycol; di(meth)acrylates of diols prepared by adding 2 mol of ethylene oxide or propylene oxide to 1 mol of bisphenol A; di- or tri(meth)acrylates of triols prepared by adding 3 mol or more of ethylene oxide or propylene oxide to 1 mol of trimethylolpropane; di(meth)acrylates of diols prepared by adding 4 mol or more of ethylene oxide or propylene oxide to 1 mol of bisphenol A; trimethylolpropane tri(meth)acrylate; pentaerythritol tri(meth)acrylate; poly(meth)acrylates of dipentaerythritol; ethylene-oxide-modified phosphoric acid (meth)acrylate; and ethylene-oxide-modified alkylphosphoric acid (meth)acrylate.

Preferred among these polyfunctional monomers are dipropylene glycol diacrylate, trimethylolpropane triacrylate, di- or tri(meth)acrylates of triols prepared by adding 3 mol or more of ethylene oxide or propylene oxide to 1 mol of trimethylolpropane, and poly(meth)acrylates of dipentaerythritol.

Examples of (meth)acrylate oligomers that can be used in the present invention include urethane (meth)acrylate oligomers, epoxy (meth)acrylate oligomers, and polyester (meth)acrylate oligomers. These may be used alone or in a combination of two or more.

Among the above polyfunctional active-energy-radiation-curable compounds, the use of difunctional (meth)acrylates allows the active-energy-radiation-curable inkjet recording ink according to the present invention to have a good balance between the low viscosity required for ejectability as an inkjet recording ink and the coating curability as an active-energy-radiation-curable ink. To this end, the content of difunctional (meth)acrylates, including the compound (E) having both a (meth)acryloyl group and a vinyl ether group, is preferably 50% by mass or more of the total amount of reactive compounds.

The active-energy-radiation-curable inkjet recording ink according to the present invention may contain monofunctional (meth)acrylates. Examples of monofunctional (meth)acrylates include, but not limited to, (meth)acrylates having substituents such as methyl, ethyl, propyl, butyl, amyl, 2-ethylhexyl, octyl, isooctyl, nonyl, decyl, lauryl, hexadecyl, stearyl, cyclohexyl, benzyl, methoxyethyl, butoxyethyl, phenoxyethyl, nonylphenoxyethyl, 2-hydroxy-3-phenoxypropyl, glycidyl, dimethylaminoethyl, diethylaminoethyl, isobornyl, dicyclopentanyl, dicyclopentenyl, dicyclopentenyloxyethyl, tetrahydrofurfuryl, and ethoxylated tetrahydrofuran; and vinyl monomers such as N-vinyl-2-pyrrolidone, N-vinyl-2-caprolactum, 2-hydroxyethyl vinyl ether, 4-hydroxybutyl vinyl ether, cyclohexyl vinyl ether, ethylhexyl vinyl ether, and diethylene glycol monovinyl ether.

The above monofunctional (meth)acrylates function as low-viscosity reactive diluents in the active-energy-radiation-curable inkjet recording ink composition. Although monofunctional acrylates decrease the viscosity of the ink composition and thus contribute to good ejectability, the use of an excessive amount of monofunctional (meth)acrylate tends to decrease the curability of coatings after ejection and thus decrease the durability of cured coatings.

Accordingly, while using polyfunctional acrylates and (meth)acrylate oligomers to ensure sufficient curability of ejected ink composition and sufficient durability of cured coatings depending on the properties of recording media and the application, the types and amounts of monofunctional acrylates are adjusted to provide a viscosity of 100 mPa·sec or less at 25°C. This is sufficiently low to ensure the flexibility required of cured coatings and the ejectability required of the active-energy-radiation-curable inkjet recording ink composition.

Among the above monofunctional (meth)acrylates, (meth)acrylates having a phenoxy group and (meth)acrylates having an alkoxy group have relatively good curability. If these (meth)acrylates are present in an amount of 20%

by mass or more of the total amount of reactive compounds, they can maintain good coating curability of the active-energy-radiation-curable ink and good adhesion to films and plastics. In particular, 2-hydroxy-3-phenoxypropyl acrylate, being a monomer highly capable of dissolving pigment dispersants, is preferably used as a reactive diluent if a concentrated pigment dispersion for preparation of the ink composition is prepared in advance from a pigment, a dispersant, and active-energy-radiation-curable compounds.

The use of a pigment as the colorant in the active-energy-radiation-curable inkjet recording ink according to the present invention for the formation of color images allows the ink to form an image with good water resistance and light resistance. Examples of pigments used include, but not limited to, organic pigments, including azo pigments such as azo lake pigments, insoluble azo pigments, condensed azo pigments, and chelate azo pigments, polycyclic pigments such as phthalocyanine pigments, anthraquinone pigments, perylene pigments, quinacridone pigments, isoindolinone pigments, benzimidazolone pigments, thioindigo pigments, dioxadine pigments, and quinophthalone pigments, nitro pigments, nitroso pigments, aniline black, and fluorescent pigments, as well as inorganic pigments, including titanium oxide, iron oxide, and carbon black. The concentration of the colorant in the ink used in this embodiment is preferably 1% to 20% by mass of the entire ink.

Examples of the above pigments include carbon blacks such as No. 2300, No. 900, MCF88, No. 33, No. 40, No. 45, No. 52, MA7, MA8, MA100, and No. 2200B from Mitsubishi Chemical Corporation; Raven 5750, Raven 5250, Raven 5000, Raven 3500, Raven 1255, and Raven 700 from Columbian; Regal 400R, Regal 330R, Regal 660R, Mogul L, Mogul 700, Monarch 800, Monarch 880, Monarch 900, Monarch 1000, Monarch 1100, Monarch 1300, and Monarch 1400 from Cabot; and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 from Degussa.

Examples of pigments used in yellow inks include C.I. Pigment Yellow 1, 2, 3, 12, 13, 14, 16, 17, 73, 74, 75, 83, 93, 95, 97, 98, 109, 110, 114, 120, 128, 129, 138, 150, 151, 154, 155, 180, 185, and 213.

Examples of pigments used in magenta inks include C.I. Pigment Red 5, 7, 12, 48(Ca), 48(Mn), 57(Ca), 57:1, 112, 122, 123, 168, 184, 202, and 209, and C.I. Pigment Violet 19.

Examples of pigments used in cyan inks include C.I. Pigment Blue 1, 2, 3, 15:3, 15:4, 60, 16, and 22.

The pigment preferably has an average particle size of 10 to 200 nm, more preferably about 50 to 150 nm. The colorant is preferably added in an amount of 1% to 20% by mass of the total amount of ink to provide sufficient image density and light resistance of print images.

If the active-energy-radiation-curable inkjet recording ink composition contains a colorant, an ink set of ink compositions containing colorants used for image formation may include the same number of ink compositions for each of the four primary colors. For example, if the four primary colors, i.e., yellow, magenta, cyan, and black, are used in combination with tints and shades of the same hue for each color, the ink set may include, for example, ink compositions of light magenta, which is a tint of magenta, red, which is a shade of magenta, light cyan, which is a tint of cyan, blue, which is a shade of cyan, gray or light black, which is a tint of black, and matt black, which is a shade of black, in addition to magenta, cyan, and black.

To form an image with improved color reproducibility, the ink set may further include ink compositions of colors such as green, red, orange, and violet.

Examples of preferred cleavage photoinitiators used in the present invention include bis(2,4,6-trimethylbenzoyl)-phenylphosphine oxide, bis(2,6-dimethoxybenzoyl)-2,4,4-trimethyl-pentylphosphine oxide, 2,4,6-trimethylbenzoyl-diphenyl-phosphine oxide, ethyl 2,4,6-trimethylbenzoylphenylphosphinate, 2-dimethylamino-2-(4-methylbenzyl)-1-(4-morpholin-4-yl-phenyl)-butan-1-one, 2-benzyl-2-dimethylamino-1-(4-morpholinophenyl)-butanone-1, 2-methyl-1-(4-methylthiophenyl)-2-morpholinopropan-1-one, 2-hydroxy-1-{4-[4-(2-hydroxy-2-methyl-propionyl)-benzyl]phenyl}-2-methyl-propan-1-one, 1-[4-(2-hydroxyethoxy)-phenyl]-2-hydroxy-2-methyl-1-propan-1-one, 2-hydroxy-2-methyl-1-phenyl-propan-1-one, 1-hydroxy-cyclohexyl-phenyl-ketone, 2,2-dimethoxy-1,2-diphenylethan-1-one, methyl benzoylformate, and 1-[4-(4-benzoylphenylsulfanyl)phenyl]-2-methyl-2-(4-methylphenylsulfonyl)propan-1-one.

Other cleavage photoinitiators include benzil, benzoin, benzoin methyl ether, benzoin ethyl ether, benzoyl isopropyl ether, benzoin isobutyl ether, oligo(2-hydroxy-2-methyl-1-(4-(1-methylvinyl)phenyl)propanone), 1,2-octanedione, 1-[4-(phenylthio)-2-(O-benzoyloxime)], ethanone 1-[9-ethyl-6-(2-methylbenzoyl)-9H-carbazol-3-yl]-1-(O-acetyloxime), and 1,7-bis(9-acridinyl)heptane. These may be used alone or in a combination of two or more.

Examples of hydrogen abstraction photoinitiators include benzophenone, 4-phenylbenzophenone, 4-methylbenzophenone, 4-chlorobenzophenone, isophthalphenone, methyl o-benzoylbenzoate, 4-benzoyl-4'-methyldiphenyl sulfide, 2-isopropylthioxanthone, 4-isopropylthioxanthone, 2,4-diethylthioxanthone, 2,4-dichlorothioxanthone, 2-chlorothioxanthone, 1-chloro-4-propoxythioxanthone, and mixtures of oxyphenylacetate esters. These may be used alone or in a combination of two or more. These may also be used in combination with one or more cleavage photoinitiators.

The above cleavage photoinitiators may be used in combination with photosensitizers such as the above thioxanthones; Michler's ketones such as 4,4-bis(dimethylamino)benzophenone and 4,4'-bis(diethylamino)benzophenone; coumarins such as coumarin 1, coumarin 338, and coumarin 102; and ketocoumarins such as 3,3'-carbonylbis(7-diethylaminocoumarin). The above cleavage photoinitiators may also be used in combination with sensitizers such as amines that undergo no addition reaction with the above polymerizable components, including trimethylamine, methyldimethanolamine, triethanolamine, p-diethylaminoacetophenone, ethyl p-dimethylaminobenzoate, isoamyl p-dimethylaminobenzoate, N,N-dimethylbenzylamine, and 4,4'-bis(diethylamino)benzophenone. It should be understood that it is preferred to select and use photoinitiators, photosensitizers, and sensitizers that are highly soluble in the above ultraviolet-curable compounds and the composition prepared therefrom and that do not decrease the ultraviolet transparency of the active-energy-radiation-curable inkjet recording ink. The photoinitiators are preferably used in a total amount of 0.1% to 20% by mass, more preferably 7% to 14% by mass, of the total amount of ultraviolet-curable compounds. The photosensitizers and the sensitizers are preferably used in an amount of 0.5% to 5% by mass of the total amount of ultraviolet-curable compounds.

For improved storage stability, the inkjet recording ink composition according to the present invention may contain polymerization inhibitors in an amount of 0.01% to 2% by mass, including hydroquinone, methoquinone, di-t-butylhydroquinone, p-methoxyphenol, butylhydroxytoluene, nitrosoamine salts, hindered phenols, hindered amines, phosphorous compounds such as phosphine and phosphites, and sulfur compounds.

The inkjet recording ink composition according to the present invention preferably contains a polymer dispersant for improved pigment dispersion stability. Examples of polymer dispersants include, but not limited to, AJISPER PB821, PB822, and PB817 from Ajinomoto Fine-Techno Co., Inc.; SOLSPERSE 24000GR, 32000, 33000, and 39000 from Avecia; and DISPARLON DA-703-50, DA-705, and DA-725 from Kusumoto Chemicals, Ltd. The polymer dispersant is preferably used in an amount of 10% to 80% by mass, more preferably 20% to 60% by mass, of the amount of pigment. If the polymer dispersant is used in an amount of less than 10% by mass, the ink tends to have insufficient dispersion stability. If the polymer dispersant is used in an amount of more than 80% by mass, the ink tends to have high viscosity and thus have low ejection stability.

The ink composition according to the present invention may further contain nonreactive resins such as acrylic resins, epoxy resins, terpene phenolic resins, and rosin esters, for example, for improved adhesion to printing substrates.

The ink composition according to the present invention may further contain a surfactant for improved wettability on recording/printing media and for surface control of the resulting coating. The ink composition according to the present invention may further contain silicones, such as silicone acrylates other than the organically modified silicone acrylates used in the present invention and various silicone oils, for improved wear resistance of the resulting coating as well as for improved wettability on recording/printing media and for surface control of the resulting coating.

The ink composition according to the present invention may contain an organic solvent for viscosity control. It is necessary to select an organic solvent that does not decrease the ejection stability and the superior wettability of the ink upon landing on the surface of recording media (prevention of repulsion) provided by the present invention. Examples of organic solvents include ketone solvents, ester solvents, ether solvents, alcohol solvents, and aliphatic and aromatic hydrocarbon solvents. These organic solvents, if used, are preferably used in limited amounts because if an excessive amount of organic solvent is used, the energy-radiation-curable ink composition would lose one of its significant features, i.e., little or no volatile component.

The ultraviolet-curable inkjet recording ink composition according to the present invention can be manufactured by processing a mixture of a pigment, ultraviolet-curable compounds having an ethylenic double bond, such as (meth)acrylates, and optionally other materials such as polymer dispersants and resins using a common disperser such as a bead mill to disperse the pigment, adding a photoinitiator to the mixture, and stirring and dissolving the mixture together with other necessary additives. A method of manufacture can also be used that includes preparing in advance a concentrated pigment dispersion (mill base) containing a pigment, part of ultraviolet-curable compounds, and a dispersant using a common disperser such as a bead mill, adding to the pigment dispersion a mixture of the remaining ultraviolet-curable compounds and additives in which a photoinitiator is dissolved, and stirring the mixture. This method is preferred because it provides good pigment dispersibility.

Whereas methods for forming images using active-energy-radiation-curable inks in the related art often involve performing irradiation with active energy radiation after each ink is irradiated to sequentially form cured coatings, there is a need for a printer apparatus that is more compact and simple and that requires a lower irradiation energy. Accordingly, methods have been increasingly proposed and employed in which coatings of different colors are formed by sequentially ejecting inks from a moving head having a single irradiation light source disposed at the rear end in the moving direction thereof and are simultaneously irradiated with active energy radiation from the moving light source to cure the coatings.

Recently, with the growing need for high-speed image formation, methods have been increasingly employed in which, while moving a recording medium, inks of different colors are printed using a plurality of fixed heads having a width equal to the overall width of the recording medium and are irradiated with active energy radiation from a light source disposed downstream of the recording medium and having a width equal to the overall width of the recording medium.

For such methods for forming images using active-energy-radiation-curable inks, reducing color mixing is of great significance because coatings of ejected inks remain in contact with each other in an uncured state until irradiation

with active energy radiation. The active-energy-radiation-curable inkjet recording ink composition and the ink set including the active-energy-radiation-curable inkjet recording ink composition according to the present invention are extremely suitable for use in the methods for forming images as described above.

The time from ejection of each ink onto a recording medium until irradiation with active energy radiation differs for each ink in the ink set, and the time for leveling of coatings also differs. Accordingly, addressing these time differences is also important.

The organically modified silicone acrylate (F) used in the present invention has better leveling properties than the organically modified silicone acrylate (B); therefore, the leveling properties of the active-energy-radiation-curable ink improve with increasing ratio Vf/Vb of the content Vf of the organically modified silicone acrylate (F) to the content Vb of the organically modified silicone acrylate (B) in the ink.

Thus, if a method for forming images or a printer apparatus is used in which the waiting time after ejection until irradiation with active energy radiation differs for each ink composition in the ink set, as described above, the ink in the ink set to be ejected earliest onto a recording medium during image formation preferably has the smallest ratio Vf/Vb, and the ink in the ink set to be ejected latest preferably has the largest ratio Vf/Vb. More preferably, the ratio Vf/Vb of an ink in the ink set to be ejected later onto a recording medium during image formation is larger than or equal to the ratio Vf/Vb of an ink in the ink set to be ejected earlier.

## EXAMPLES

The present invention is further illustrated by the following examples, although these examples do not limit the present invention. The parts in the examples are parts by mass.

Method for Manufacturing Concentrated Dispersion Preparation of Concentrated Yellow Dispersion

| | |
|---|---|
| C.I. Pigment Yellow 180 | 2.4 parts |
| (Toner Yellow HG from Clariant) | |
| AJISPER PB821 | 1.0 part |
| (basic polymer dispersant from Ajinomoto Fine-Techno Co., Inc.) | |
| Dipropylene glycol diacrylate | 16.6 parts |
| (MIRAMER M-222 from Miwon Commercial) | |
| 2-Hydroxy-3-phenoxypropyl acrylate | 4.0 parts |
| (NEW FRONTIER PGA from Dai-Ichi Kogyo Seiyaku Co.,Ltd.) | |

The above materials were mixed together with stirring using a stirrer for 1 hour and were then processed in a bead mill for 4 hours to prepare a concentrated yellow dispersion.

Preparation of Concentrated Magenta Dispersion

| | |
|---|---|
| C.I. Pigment Red 122 | 3.2 parts |
| (FASTOGEN SUPPER MAGENTA RG from DIC Corporation) | |
| AJISPER PB821 | 1.5 parts |
| (basic polymer dispersant from Ajinomoto Fine-Techno Co., Inc.) | |
| Dipropylene glycol diacrylate | 23.3 parts |
| (MIRAMER M-222 from Miwon Commercial) | |
| 2-Hydroxy-3-phenoxypropyl acrylate | 4.0 parts |
| (NEW FRONTIER PGA from Dai-Ichi Kogyo Seiyaku Co.,Ltd.) | |

The above materials were mixed together with stirring using a stirrer for 1 hour and were then processed in a bead mill for 4 hours to prepare a concentrated magenta dispersion.

Preparation of Concentrated Cyan Dispersion

| | |
|---|---|
| C.I. Pigment Blue 15:3 | 1.2 parts |
| (Fastogen Blue TGR-G from DIC Corporation) | |
| AJISPER PB821 | 0.4 part |
| (basic polymer dispersant from Ajinomoto Fine-Techno Co., Inc.) | |
| Dipropylene glycol diacrylate | 9.5 parts |
| (MIRAMER M-222 from Miwon Commercial) | |
| 2-Hydroxy-3-phenoxypropyl acrylate | 0.9 part |
| (NEW FRONTIER PGA from Dai-Ichi Kogyo Seiyaku Co.,Ltd.) | |

The above materials were mixed together with stirring using a stirrer for 1 hour and were then processed in a bead mill for 4 hours to prepare a concentrated cyan dispersion.

Preparation of Concentrated Black Dispersion

| | |
|---|---|
| Carbon black | 2.0 parts |
| (Mitsubishi Carbon #960 from Mitsubishi Chemical Corporation) | |
| AJISPER PB821 | 1.0 part |
| (basic polymer dispersant from Ajinomoto Fine-Techno Co., Inc.) | |
| Dipropylene glycol diacrylate | 12.5 parts |
| (MIRAMER M-222 from Miwon Commercial) | |
| 2-Hydroxy-3-phenoxypropyl acrylate | 4.5 parts |
| (NEW FRONTIER PGA from Dai-Ichi Kogyo Seiyaku Co.,Ltd.) | |

The above materials were mixed together with stirring using a stirrer for 1 hour and were then processed in a bead mill for 4 hours to prepare a concentrated black dispersion.

EXAMPLE 1

After 13.4 parts of dipropylene glycol diacrylate, 6.0 parts of pentaerythritol hexaacrylate, 30.5 parts of 2-(2-vinyloxyethoxy)ethyl acrylate, and 9.0 parts of isooctyl acrylate were added together, 3.0 parts of IRGACURE 819, 4.0 parts of LUCIRIN TPO, 2.5 parts of DAROCUR DR1173, and 1.0 part of IRGACURE 907 were dissolved as photoinitiators by heating. To the solution were added 24.0 parts of the concentrated yellow dispersion prepared in the Preparation of Concentrated Yellow Dispersion and two silicone polyether acrylates, i.e., 0.3 part of Tego Rad 2300 and 1.0 part of Tego Rad 2100. Also added were 2.5 parts of 2,4-diethylthioxanthone as a photosensitizer, 2.5 parts of dimethylaminobenzoic acid as a sensitizer, 0.1 part of 2,5-di-t-butylhydroquinone as a polymerization inhibitor, and 0.2 part of a modified silicone oil. After they were added and sufficiently mixed together, the mixture was filtered through a 1.2 μm membrane filter to obtain an active-energy-radiation-curable inkjet recording yellow ink composition, which is referred to as Yellow 1.

EXAMPLES 2 TO 6 AND COMPARATIVE EXAMPLES 1 TO 12

Active-energy-radiation-curable inkjet recording ink compositions of Examples 2 to 6 and Comparative Examples 1 to 12 were prepared as in Example 1 according to the formulations shown in Tables 1 and 2. The resulting active-energy-radiation-curable inkjet recording ink compositions of Examples 2 to 6 are referred to as Naenta 1, Cyan 1, Black 1, Magenta 2, and Cyan 2, respectively. The resulting active-energy-radiation-curable inkjet recording ink compositions of Comparative Examples 1 to 12 are referred to as Yellow 3, Magenta 3, Cyan 3, Black 3, Yellow 4, Magenta 4, Cyan 4, Black 4, Magenta 5, Cyan 5, Magenta 6, and Cyan 6, respectively.
[Table 1]

(Table 1)

| | Example 1 | Example 2 | Example 3 | Example 4 | Example 5 | Example 6 |
|---|---|---|---|---|---|---|
| | Yellow 1 | Magenta 1 | Cyan 1 | Black 1 | Magenta 2 | Cyan 2 |
| C.I. Pigment Yellow 180 | 2.4 | | | | | |
| C.I. Pigment Red 122 | | 3.2 | | | 3.2 | |
| C.I. Pigment Blue 15:3 | | | 1.2 | | | 1.2 |
| Carbon black | | | | 2 | | |
| AJISPER PB-821 | 1 | 1.5 | 0.4 | 1 | 1.5 | 0.4 |
| MIRAMER M-222 | 16.6 | 23.3 | 9.5 | 12.5 | 23.3 | 9.5 |
| NEW FRONTIER PGA | 4 | 4 | 0.9 | 4.5 | 4 | 0.9 |
| Concentrated dispersion | 24 | 32 | 12 | 20 | 32 | 12 |
| MIRAMER M-222 | 13.4 | 4.7 | 20.5 | 10.9 | 5.7 | 21.5 |
| DPA-600T [C] | 6 | 3.3 | 7 | 4 | 3.3 | 7 |
| MIRAMER M-3130 | | | 7.5 | | | 7.5 |
| VEEA-Ai | 30.5 | 30 | 29 | 35 | 30 | 29 |
| IOAA | 9 | 12.9 | 8 | 10 | 12.9 | 8 |
| IRGACURE 819 | 3 | 3.5 | 4.2 | 6.5 | 3.5 | 4.2 |
| LUCIRIN TPO | 4 | | | 2.5 | | |
| DAROCUR DR1173 | 2.5 | 3 | 2.5 | 2.5 | 3 | 2.5 |
| IRGACURE 907 | 1 | 5 | 4.2 | 3 | 5 | 4.2 |
| 2,4-Diethylthioxanthone | 2.5 | 1.5 | 1 | 1.5 | 1.5 | 1 |
| Ethyl dimethylaminobenzoate | 2.5 | 2.5 | 2.5 | 2.5 | 2.5 | 2.5 |
| 2,5-Di-t-butylhydroquinone | 0.1 | 0.1 | 0.1 | 0.1 | 0.1 | 0.1 |
| KF-351 A | 0.2 | 0.2 | 0.2 | 0.2 | 0.2 | 0.2 |
| TEGO Rad 2300 | 0.3 | 0.3 | 0.3 | 0.3 | 0.3 | 0.3 |
| TEGO Rad 2100 | 1 | 1 | 1 | 1 | | |
| TEGO Rad 2500 | | | | | | |
| Total | 100 | 100 | 100 | 100 | 100 | 100 |

[Table 2]

(Table 2)

| | Comparative example 1 Yellow 3 | Comparative example 2 Magenta 3 | Comparative example 3 Cyan 3 | Comparative example 4 Black 3 | Comparative example 5 Yellow 4 | Comparative example 6 Magenta 4 | Comparative example 7 Cyan 4 | Comparative example 8 Black 4 | Comparative example 9 Magenta 5 | Comparative example 10 Cyan 5 | Comparative example 11 Magenta 6 | Comparative example 12 Cyan 6 |
|---|---|---|---|---|---|---|---|---|---|---|---|---|
| C.I. Pigment Yellow 180 | 2.4 | | | | 2.4 | | | | | | | |
| C.I. Pigment Red 122 | | 3.2 | | | | 3.2 | | | 3.2 | | 3.2 | |
| C.I. Pigment Blue 15:3 | | | 1.2 | | | | 1.2 | | | 1.2 | | 1.2 |
| Carbon black | | | | 2 | | | | 2 | | | | |
| AJISPER PB-821 | 1 | 1.5 | 0.4 | 1 | 1 | 1.5 | 0.4 | 1 | 1.5 | 0.4 | 1.5 | 0.4 |
| MIRAMER M-222 | 16.6 | 23.3 | 9.5 | 12.5 | 16.6 | 23.3 | 9.5 | 12.5 | 23.3 | 9.5 | 23.3 | 9.5 |
| NEW FRONTIER PGA | 4 | 4 | 0.9 | 4.5 | 4 | 4 | 0.9 | 4.5 | 4 | 0.9 | 4 | 0.9 |
| Concentrated dispersion | 24 | 32 | 12 | 20 | 24 | 32 | 12 | 20 | 32 | 12 | 32 | 12 |
| MIRAMER M-222 | 14.7 | 6 | 21.8 | 12.2 | 28.4 | 19.7 | 49.5 | 45.9 | 5.3 | 21.1 | 5.7 | 21.5 |
| DPA-600T [C] | 6 | 3.3 | 7 | 4 | 6 | 3.3 | 7 | 4 | 3.3 | 7 | 3.3 | 7 |
| MIRAMER M-3130 | | | 7.5 | | | | 7.5 | | | 7.5 | | 7.5 |
| VEEA-Ai | 30.5 | 30 | 29 | 35 | | | | | 30 | 29 | 30 | 29 |
| IOAA | 9 | 12.9 | 8 | 10 | 24.5 | 27.9 | 8 | 10 | 12.9 | 8 | 12.9 | 8 |
| IRGACURE 819 | 3 | 3.5 | 4.2 | 6.5 | 3 | 3.5 | 4.2 | 6.5 | 3.5 | 4.2 | 3.5 | 4.2 |
| LUCIRIN TPO | 4 | | | 2.5 | 4 | | | 2.5 | | | | |
| DAROCUR DR1173 | 2.5 | 3 | 2.5 | 2.5 | 2.5 | 3 | 2.5 | 2.5 | 3 | 2.5 | 3 | 2.5 |
| IRGACURE 907 | 1 | 5 | 4.2 | 3 | 1 | 5 | 4.2 | 3 | 5 | 4.2 | 5 | 4.2 |
| 2,4-Diethylthioxanthone | 2.5 | 1.5 | 1 | 1.5 | 2.5 | 1.5 | 1 | 1.5 | 1.5 | 1 | 1.5 | 1 |

(continued)

| | Comparative example 1 Yellow 3 | Comparative example 2 Magenta 3 | Comparative example 3 Cyan 3 | Comparative example 4 Black 3 | Comparative example 5 Yellow 4 | Comparative example 6 Magenta 4 | Comparative example 7 Cyan 4 | Comparative example 8 Black 4 | Comparative example 9 Magenta 5 | Comparative example 10 Cyan 5 | Comparative example 11 Magenta 6 | Comparative example 12 Cyan 6 |
|---|---|---|---|---|---|---|---|---|---|---|---|---|
| Ethyl dimethylaminobenzoate | 2.5 | 2.5 | 2.5 | 2.5 | 2.5 | 2.5 | 2.5 | 2.5 | 2.5 | 2.5 | 2.5 | 2.5 |
| 2,5-Di-t-butylhydroquinone | 0.1 | 0.1 | 0.1 | 0.1 | 0.1 | 0.1 | 0.1 | 0.1 | 0.1 | 0.1 | 0.1 | 0.1 |
| KF-351A | 0.2 | 0.2 | 0.2 | 0.2 | 0.2 | 0.2 | 0.2 | 0.2 | 0.2 | 0.2 | 0.2 | 0.2 |
| TEGO Rad 2300 | 0 | 0 | 0 | 0 | 0.3 | 0.3 | 0.3 | 0.3 | | | | |
| TEGO Rad 2100 | 0 | 0 | 0 | 0 | 1 | 1 | 1 | 1 | 0.7 | 0.7 | | |
| TEGO Rad 2500 | | | | | | | | | | | 0.3 | 0.3 |
| Total | 100 | 100 | 100 | 100 | 100 | 100 | 100 | 100 | 100 | 100 | 100 | 100 |

The names listed in the columns showing the raw materials in Tables 1 and 2 are names of products and chemical substances that are probably the most commonly used. The names of chemical substances, products, and manufacturers corresponding to the individual raw materials are as follows:

(a) Pigment

(a1) C.I. Pigment Yellow 180: Toner Yellow-HG (from Clariant Japan)
(a2) C.I. Pigment Red 122: FASTOGEN SUPER MAGENTA RG (from DIC Corporation)
(a3) C.I. Pigment Blue 15:3: FASTOGEN BLUE TGR-G (from DIC Corporation)
(a4) Carbon black: Mitsubishi Carbon #960 (from Mitsubishi Chemical Corporation)

(b) Polymer dispersant

(b1) Basic (amine) polymer dispersant: AJISPER PB-821 (from Ajinomoto Fine-Techno Co., Inc.)

(c) Active-energy-radiation-curable compound

(c1) 2-Hydroxy-3-phenoxypropyl acrylate: NEW FRONTIER PGA (from Dai-Ichi Kogyo Seiyaku Co., Ltd.)
(c2) Dipropylene glycol diacrylate: MIRAMER M-222 (from Miwon Commercial)
(c3) Dipentaerythritol hexaacrylate: DPA-600T[C] (from TOWA=DIC Zhangjiagang Chemical)
(c4) Ethoxytrimethylolpropane triacrylate: MIRAMER M-3130 (from Miwon Commercial)
(c5) 2-(2-(Vinyloxyethoxy)ethyl acrylate: VEEA-AI (from Nippon Shokubai Co., Ltd.)
(c6) Isooctyl acrylate: IOAA (from Osaka Organic Chemical Industry Ltd.)

(d) Active energy radiation polymerization initiator

(d1) Bis(2,4,6-trimethylbenzoyl)-phenylphosphine oxide: IRGACURE 819 (from BASF Japan)
(d2) Diphenyl-2,4,6-trimethylbenzoylphosphine-oxide: LUCIRIN TPO (from BASF Japan)
(d3) 2-Hydroxy-2-methylpropiophenone: DAROCURE DR1173 (from BASF Japan)
(d4) 2-Methyl-1-[4-(methylthio)phenyl]-2-(4-morphonyl)-1-propanone: IRGACURE 907 (from BASF Japan)

(e) Photosensitizer

(e1) 2,4-Diethylthioxanthone: JETX (from Chembridge International)

(f) Sensitizer

(f1) Ethyl dimethylaminobenzoate: DBE (from Midori Kagaku Co., Ltd.)

(g) Polymerization inhibitor

(g1) 2,5-Di-t-butylhydroquinone: Nonflex Alba (from Seiko Chemical Co., Ltd.)

(h) Silicone oil

(h1) Modified silicone oil: KF-351A (from Shin-Etsu Chemical Co., Ltd.)

(i) Silicone acrylate

(i1) Silicone polyether acrylate: TEGO Rad 2300 (Evonik Degussa Japan)
(i2) Silicone acrylate: TEGO Rad 2100 (Evonik Degussa Japan)
(i3) Silicone polyether acrylate: TEGO Rad 2500 (Evonik Degussa Japan), which includes a main chain having a polydimethylsiloxane structure but no side chain containing a polyoxyalkylene and which has a modification rate of less than 20%.

Evaluation of Properties of Active-Energy-Radiation-Curable Inkjet Recording Ink Compositions

The properties of the active-energy-radiation-curable inkjet recording ink compositions prepared in Examples

1 to 6 and Comparative Examples 1 to 12 were evaluated by the following evaluation methods. The results are shown in Table 2.

Metal Halide Lamp Curability

The active-energy-radiation-curable inkjet recording ink prepared in each example was applied to a 5 cm x 5 cm PET film (Lumirror 250-E22 from Toray Industries, Inc.) at a thickness of about 6 μm using a spin coater and was irradiated with ultraviolet radiation at an irradiation energy of 0.2 $J/cm^2$ using a conveyor-type ultraviolet irradiation system (equipped with one metal halide lamp available from Japan Storage Battery Co., Ltd., output power: 120 W/cm). The resulting coating was tested by rubbing with nonwoven fabric (the trade name BEMCOT from Asahi Kasei Corporation) to determine the number of passes at which no scratch occurred in the surface of the coating. The results are shown in Table 3.

LED Curability

The active-energy-radiation-curable inkjet recording ink composition prepared in each example was applied to a 5 cm x 5 cm PET film (Lumirror 250-E22 from Toray Industries, Inc.) at a thickness of about 2 μm by the printing process described above and was then irradiated at an irradiation energy of 100 $mJ/cm^2$ for each irradiation using an LED irradiation system equipped with a stage-moving unit available from Hamamatsu Photonics K.K. (emission wavelength: 385 nm, peak intensity: 500 $mW/cm^2$). The number of passes at which the coating became tack-free was determined. The results are shown in Table 3.

Adhesion

The ink prepared in each of the Examples and Comparative Examples was applied to a PET film (Lumirror 250-E22 from Toray Industries, Inc.) at a thickness of 6 μm using a spin coater and was tested for adhesion by the following method according to JIS K5600-5-6:

(1) Six cuts were made at intervals of 2 mm using a cross-cut guide by placing a blade perpendicular to the coating. Six perpendicular cuts were then made in a direction shifted by 90°C.
(2) A tape was cut to a length of about 75 mm, was applied to the cross-cut portion of the coating, and was firmly rubbed with a finger so that the coating was visible through the tape. Within 5 minutes after application, the tape was reliably removed in 0.5 to 1.0 second at an angle close to 60°.

The coating was visually inspected for peeling and was rated on the following scale. The results are shown in Table 3.
Excellent: The coating had thin cuts with smooth edges and did not peel at the intersections of the cuts or in the squares.
Good: The coating peeled at the intersections of the cuts and had less than 15% of the squares missing.
Fair: The coating had a missing area of less than 65%.
Poor: The coating had a missing area of 65% or more.

Solid Coating Formability

The ink prepared in each of the Examples and Comparative Examples was used to print a solid test pattern on a PET film (Lumirror 250 E22 from Toray Industries, Inc.) as a nonabsorbent printing substrate using an inkjet printer (Konica Minolta EB100 inkjet tester) and a KM512L printer head for testing (ejection volume: 42 pL). The ink was then cured by ultraviolet irradiation at an irradiation energy of 0.2 $J/cm^2$ using a conveyor-type ultraviolet irradiation system (equipped with one metal halide lamp available from Japan Storage Battery Co., Ltd., output power: 120 W/cm) and was visually inspected for image defects in the solid area due to lack of leveling properties of the ink. The results are shown in Table 3.
Excellent: The solid area was completely colored and uniform.
Good: The solid area had slight variation in color density.
Fair: The printing substrate was locally visible because the solid area was incompletely colored.
Poor: The printing substrate was visible because the solid area was incompletely colored, and image defects were easily found.
[Table 3]

(Table 3)

| | Ink | Metal halide lamp curability (passes) | LED curability (passes) | Adhesion | Solid coating formability |
|---|---|---|---|---|---|
| Example 1 | Yellow 1 | 1 | 4 | Excellent | Good |
| Example 2 | Magenta 1 | 1 | 4 | Excellent | Good |
| Example 3 | Cyan 1 | 1 | 8 | Excellent | Good |
| Example 4 | Black 1 | 1 | 6 | Excellent | Good |
| Example 5 | Magenta 2 | 1 | 4 | Excellent | Good |
| Example 6 | Cyan 2 | 1 | 8 | Excellent | Good |
| Comparative example 1 | Yellow 3 | 1 | 4 | Good | Poor |
| Comparative example 2 | Magenta 3 | 1 | 4 | Good | Poor |
| Comparative example 3 | Cyan 3 | 1 | 8 | Good | Poor |
| Comparative example 4 | Black 3 | 1 | 6 | Good | Poor |
| Comparative example 5 | Yellow 4 | 1 | 12 | Poor | Good |
| Comparative example 6 | Magenta 4 | 1 | 8 | Poor | Good |
| Comparative example 7 | Cyan 4 | 1 | 25 | Poor | Good |
| Comparative example 8 | Black 4 | 1 | 18 | Poor | Good |
| Comparative example 9 | Magenta 5 | 1 | 4 | Excellent | Excellent |
| Comparative example 10 | Cyan 5 | 1 | 4 | Excellent | Excellent |
| Comparative example 11 | Magenta 6 | 1 | 8 | Excellent | Poor |
| Comparative example 12 | Cyan 6 | 1 | 6 | Excellent | Poor |

The results in Table 3 show that the active-energy-radiation-curable inkjet recording inks of Examples 1 to 6, which contained an organically modified silicone acrylate (B) and, as an active-energy-radiation-curable compound, a compound (E) having a (meth)acryloyl group and a vinyl ether group, had good curability and adhesion. Although the inks of Examples 5 and 6, which contained no organically modified silicone acrylate (F) having a good leveling function, were not rated as fair or lower, they had a slightly lower solid coating formability (uniformity in a completely coated area) than the inks of Examples 1 to 4. The inks of Comparative Examples 1 to 4, which contained no organically modified silicone acrylate, had low uniformity in a completely coated area because of the poor leveling properties of the ink coating before curing, and also tended to have slightly low coating adhesion. The inks of Comparative Examples 5 to 8, which contained no compound (E) having a (meth)acryloyl group and a vinyl ether group, had considerably low LED curability and adhesion. In particular, the cyan ink and the black ink had significantly low LED curability, which would cause more color mixing because inks ejected onto nonabsorbent media remain in contact in an uncured state for a longer period of time. The inks of Comparative Examples 9 and 10, which contained only an organically modified silicone acrylate (F), had good leveling properties and uniformity in a completely coated area, although they tended to cause color mixing, as shown by the evaluations discussed later. The inks of Comparative Examples 11 and 12, which contained an organically

modified silicone acrylate inferior in leveling properties to an organically modified silicone acrylate (B), had low image uniformity in a completely coated area.

Evaluation of Image Quality of Active-Energy-Radiation-Curable Inkjet Recording Ink Compositions

The active-energy-radiation-curable inkjet recording ink compositions prepared in Examples 1 to 6 and Comparative Examples 1 to 12 were used to form images on nonabsorbent media for image quality evaluation.

For evaluation, the following ink sets, in which each ink was identical in the types and amounts of organically modified silicone acrylate (B) and compound (E) having a (meth)acryloyl group and a vinyl ether group, were assumed: a group of Examples 1 to 4 (ink set 1), a group of Examples 5 and 6 (ink set 2), a group of Comparative Examples 1 to 4 (ink set 3), a group of Comparative Examples 5 to 8 (ink set 4), a group of Comparative Examples 9 and 10 (ink set 5), and a group of Comparative Examples 11 and 12 (ink set 6). The following color mixing evaluations were performed between inks of different colors in the same set that could actually cause color mixing.

EXAMPLE 7-1

Of ink set 1, which includes Yellow 1, Magenta 1, Cyan 1, and Black 1 prepared in Examples 1 to 4, Yellow 1 and Magenta 1 were ejected onto a recording medium in proximity to each other and were evaluated for color mixing as follows.

Desktop Evaluation of Color Mixing (Color Mixing Evaluation 1)

With a micropipette, droplets of two different inks selected from ink set 1 (for example, Yellow 1 (Y1) and Magenta 1 (M1)) with a volume of 50 μL were simultaneously deposited on a 5 cm x 5 cm PET film (Lumirror 250 E22 from Toray Industries, Inc.) at a distance of 1 cm from the center of rotation of a spin coater such that the two positions where the droplets were deposited and the center of rotation lay in a straight line. The PET film was rotated about the midpoint between the two positions where the ink droplets were deposited using the spin coater at a steady rotational speed of 6,000 revolutions for 10 seconds to simultaneously spread the droplets into coatings. In this manner, as shown in Fig. 1, the two ink droplets deposited on both sides of the center of rotation P spread from their respective positions A and B where they were deposited to form 2 μm thick coatings defining a boundary passing through the center of rotation. These coatings were cured by ultraviolet irradiation using a conveyor-type ultraviolet irradiation system (equipped with one metal halide lamp available from Japan Storage Battery Co., Ltd., output power: 120 W/cm).

Several hours after curing, the colors of the coatings of Yellow 1 and Magenta 1 were measured at the positions where the droplets were initially deposited, i.e., at a distance of 1 cm from the boundary line, to determine L*', a*', and b', and the color differences ΔE from their original colors before color mixing, i.e., L*, a*, and b*, were calculated. The values of ΔE on both sides of the boundary line were added together as the color mixing index.

The above method will be described in greater detail below with reference to Fig. 1.

Assuming that the color coordinates of the coatings of Yellow 1 and Magenta 1 before testing are L*y, a*y, and b*y and L*m, a*m, b*m, respectively, and the color coordinates of the coatings of Yellow 1 and Magenta 1 at their respective measurement points after simultaneous coating using a spin coater in the above manner are L*y', a*y', and b*y'* and L*m', a*m', and b*m', respectively, the color mixing index is represented by K = ΔEtotal/ΔEym.

Distance between Y1 and M1 before color mixing:

$$\Delta Eym = SQRT((L^*y-L^*m)^2+(a^*y-a^*m)^2+(b^*y-b^*m)^2)$$

Distance between Y1 before color mixing and Y1 after color mixing:

$$\Delta Ey = SQRT((L^*y-L^*y')^2+(a^*y-a^*y')^2+(b^*y-b^*y')^2)$$

Distance between M1 before color mixing and M1 after color mixing:

$$\Delta Em = SQRT((L^*m-L^*m')^2+(a^*m-a^*m')^2+(b^*m-b^*m')^2)$$

$$\Delta Etotal = \Delta Em + \Delta Ey$$

$$\text{Color mixing index: } K = \Delta Etotal/\Delta Eym$$

The color mixing index K is zero if no color mixing occurs and approaches 1 as more color mixing occurs.

In addition, the boundary line after coating using a spin coater was visually inspected and rated on the following scale:

Excellent: The boundary line had no irregularities.
Good: The boundary line had slight irregularities that were not visible without a magnifying glass.
Fair: The boundary line had slight irregularities that were visible without a magnifying glass.
Poor: The boundary line had clear irregularities that were visible to the naked eye without a magnifying glass.

The evaluations are shown in Table 4.

EXAMPLES 7-2 TO 7-6

Inks were selected from ink set 1 in the combinations shown in Table 4 and were evaluated as in Example 7-1. The results are shown in Table 4.

EXAMPLE 8-1

Ink set 2, which includes Magenta 2 and Cyan 2, was evaluated as in Example 7-1. The results are shown in Table 4.

COMPARATIVE EXAMPLES 13-1 TO 13-6

Inks were selected from ink set 3, which includes Yellow 3, Magenta 3, Cyan 3, and Black 3, in the combinations shown in Table 4 and were evaluated as in Example 7-1. The results are shown in Table 4.

COMPARATIVE EXAMPLES 14-1 TO 14-6

Inks were selected from ink set 4, which includes Yellow 4, Magenta 4, Cyan 4, and Black 4, in the combinations shown in Table 4 and were evaluated as in Example 7-1. The results are shown in Table 4.

COMPARATIVE EXAMPLE 15-1

Ink set 5, which includes Magenta 5 and Cyan 5, was evaluated as in Example 7-1.

The results are shown in Table 4.

COMPARATIVE EXAMPLE 16-1

Ink set 6, which includes Magenta 6 and Cyan 6, was evaluated as in Example 7-1. The results are shown in Table 4.

Evaluation of Color Mixing Using Actual Machine (Color

Mixing Evaluation 2)

Two different inks selected from one ink set were used to print a test pattern including two adjacent regions of different colors on a PET film (Lumirror 250 E22 from Toray Industries, Inc.) as a nonabsorbent printing substrate using an inkjet printer (Konica Minolta EB100 inkjet tester) and a KM512L printer head for testing (ejection volume: 42 pL). The inks were then cured by ultraviolet irradiation at an irradiation energy of 0.2 $J/cm^2$ using a conveyor-type ultraviolet irradiation system (equipped with one metal halide lamp available from Japan Storage Battery Co., Ltd., output power: 120 W/cm) and were visually inspected and rated for color mixing on the following scale. The evaluations are shown in

Table 4.
Excellent: The details of the test pattern were clearly printed.
Good: The details of the test pattern had slight irregularities that were not visible without a magnifying glass.
Fair: The details of the test pattern had irregularities that were visible without a magnifying glass.
Poor: Color mixing occurred in the test pattern.

[Table 4]

(Table 4)

| | Ink 1 | Ink 2 | Color mixing evaluation 1 | | Color mixing evaluation 2 |
|---|---|---|---|---|---|
| | | | (ΔE%) | Visual inspection of boundary line | |
| Example 7-1 | Yellow 1 | Magenta 1 | 0.25 | Excellent | Excellent |
| Example 7-2 | Yellow 1 | Cyan 1 | 0.27 | Excellent | Excellent |
| Example 7-3 | Yellow 1 | Black 1 | 0.24 | Excellent | Excellent |
| Example 7-4 | Magenta 1 | Cyan 1 | 0.17 | Excellent | Excellent |
| Example 7-5 | Magenta 1 | Black 1 | 0.19 | Excellent | Excellent |
| Example 7-6 | Cyan 1 | Black 1 | 0.15 | Excellent | Excellent |
| Example 8-1 | Magenta 2 | Cyan 2 | 0.20 | Good | Good |
| Comparative example 13-1 | Yellow 3 | Magenta 3 | 0.48 | Poor | Poor |
| Comparative example 13-2 | Yellow 3 | Cyan 3 | 0.49 | Poor | Poor |
| Comparative example 13-3 | Yellow 3 | Black 3 | 0.44 | Poor | Poor |
| Comparative example 13-4 | Magenta 3 | Cyan 3 | 0.38 | Poor | Poor |
| Comparative example 13-5 | Magenta 3 | Black 3 | 0.39 | Poor | Poor |
| Comparative example 13-6 | Cyan 3 | Black 3 | 0.32 | Poor | Poor |
| Comparative example 14-1 | Yellow 4 | Magenta 4 | 0.26 | Excellent | Excellent |
| Comparative example 14-2 | Yellow 4 | Cyan 4 | 0.28 | Excellent | Excellent |
| Comparative example 14-3 | Yellow 4 | Black 4 | 0.25 | Excellent | Excellent |
| Comparative example 14-4 | Magenta 4 | Cyan 4 | 0.18 | Excellent | Excellent |
| Comparative example 14-5 | Magenta 4 | Black 4 | 0.20 | Excellent | Excellent |
| Comparative example 14-6 | Cyan 4 | Black 4 | 0.16 | Excellent | Excellent |
| Comparative example 15-1 | Magenta 5 | Cyan 5 | 0.41 | Poor | Poor |
| Comparative example 16-1 | Magenta 6 | Cyan 6 | 0.38 | Fair | Fair |

As can be seen from the results shown in Table 4, color mixing was effectively prevented between the ink compositions selected from ink set 1 in Examples 7-1 to 7-6 and ink set 2 in Example 8-1, which contained a particular silicone acrylate specified in the present application, in both the desktop evaluation and the evaluation using an actual machine.

By contrast, color mixing was not reduced between the ink compositions from ink set 3 in Comparative Example 13-1 to 13-6 because they contained no organically modified silicone acrylate. The ink compositions from ink set 4 in Comparative Example 14-1 to 14-6, which contained an organically modified silicone acrylate (B) and an organically modified silicone acrylate (F), had a superior function of reducing color mixing; however, as can be seen from Table 3, they had low coating curability and adhesion because they contained no active-energy-radiation-curable compound having a (meth)acryloyl group and a vinyl ether group. Thus, although the curability is not affected if a metal halide lamp is used, a longer curing time would be needed if an LED lamp is used; therefore, color mixing might not be effectively reduced.

Ink set 5 in Comparative Example 15, which contained only an organically modified silicone acrylate (F), had good leveling properties, as demonstrated by the evaluations of solid coating formability in Table 3, but had a considerably poor function of reducing color mixing. Ink set 6 in Comparative Example 16, which contained an organically modified silicone acrylate having no side chain containing a polyoxyalkylene group, did not provide a superior effect of reducing color mixing as demonstrated in the Examples. Also, this ink set did not have good leveling properties as provided by an organically modified silicone acrylate (F). Thus, as can be seen from Table 3, this ink set had low solid coating formability, which makes it difficult to form a uniform coating.

Industrial Applicability

An active-energy-radiation-curable inkjet recording ink according to the present invention can form fine images on nonabsorbent substrates and can also maintain good image quality when used with inkjet recording apparatuses capable of high-speed printing because it has good leveling properties with little repulsion when ejected onto nonabsorbent substrates, has good curability, and causes little color mixing between uncured coatings formed adjacent to each other.

Reference Signs List

- P center of rotation of spin coater
- A position where ink droplet is deposited
- B position where ink droplet is deposited

## Claims

1. An active-energy-radiation-curable inkjet recording ink composition comprising a pigment (A), an organically modified silicone acrylate (B), an active-energy-radiation-curable compound (C) other than the silicone acrylate, and a radical polymerization initiator (D), the organically modified silicone acrylate (B) including a main chain having a polydimethylsiloxane structure and a side chain containing a polyoxyalkylene having a (meth)acryloyl group at an end thereof, the active-energy-radiation-curable compound (C) being a compound (E) having a (meth)acryloyl group and a vinyl ether group.

2. The active-energy-radiation-curable inkjet recording ink composition according to Claim 1, wherein the organically modified silicone acrylate (B) is represented by general formula (1):

[Chem. 1]

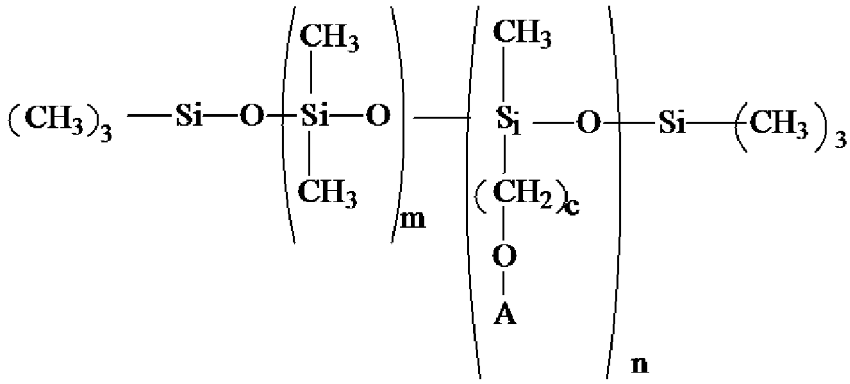

(1)

(wherein A is a polyoxyalkylene group having a (meth)acryloyl group at an end thereof; one or some of the polyoxyalkylene groups may have hydroxyl groups at the ends thereof instead of the (meth)acryloyl groups; c is an integer of 0 to 5; and m and n are integers of 1 or more).

3. The active-energy-radiation-curable inkjet recording ink composition according to Claim 1 or 2, wherein the polyoxyalkylene group comprises only ethylene oxide units.

4. The active-energy-radiation-curable inkjet recording ink composition according to any one of Claims 1 to 3, further comprising an organically modified silicone acrylate (F) having better leveling properties than the organically modified silicone acrylate (B).

5. The active-energy-radiation-curable inkjet recording ink composition according to any one of Claims 1 to 4, wherein the organically modified silicone acrylate (F) includes a main chain having a polydimethylsiloxane structure and a side chain that has a total of 2 to 10 carbon atoms and that has an alkyl group optionally substituted by a hydroxyl group and having a (meth)acryloyl group attached at an end thereof.

6. The active-energy-radiation-curable inkjet recording ink composition according to any one of Claims 1 to 5, wherein the organically modified silicone acrylate (F) is a compound represented by general formula (2):

[Chem. 2]

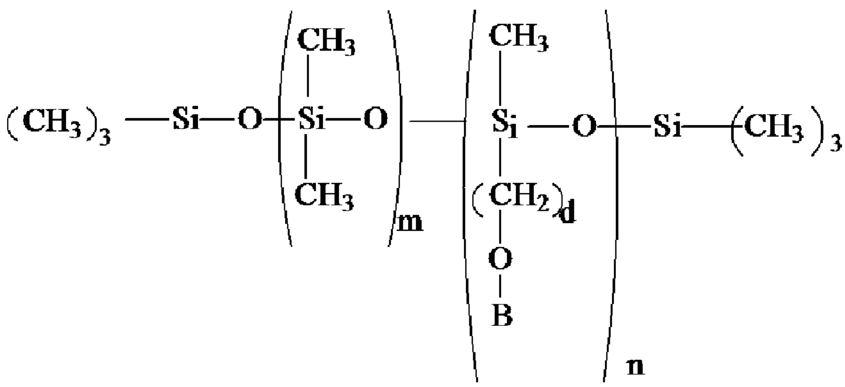

(2)

(wherein P is an alkyl group that has 2 to 6 carbon atoms, that is optionally substituted by a hydroxyl group, and that has a (meth)acryloyl group at an end thereof; d is an integer of 0 to 5; and p and q are integers of 1 or more).

7. The active-energy-radiation-curable inkjet recording ink composition according to any one of Claims 1 to 6, wherein

the total content of the organically modified silicone acrylate (B) and the organically modified silicone acrylate (E) in the active-energy-radiation-curable ink composition is 0.1% to 1% by mass.

**8.** The active-energy-radiation-curable inkjet recording ink composition according to any one of Claims 1 to 7, wherein the compound (E) having a (meth)acryloyl group and a vinyl ether group is 2-(2-vinyloxyethoxy)ethyl (meth)acrylate.

**9.** The active-energy-radiation-curable inkjet recording ink composition according to any one of Claims 1 to 8, wherein the content of the compound (E) having both a (meth)acryloyl group and a vinyl ether group is 25% to 50% by mass of the total content of all polymerizable monomers.

**10.** An ink set comprising two or more active-energy-radiation-curable inkjet recording ink compositions, containing different pigments, according to any one of Claims 1 to 9.

**11.** The ink set according to Claim 10, wherein an active-energy-radiation-curable inkjet recording ink in the ink set to be ejected earliest onto a recording medium during image formation has the smallest ratio Vf/Vb, and an active-energy-radiation-curable inkjet recording ink in the ink set to be ejected latest has the largest ratio Vf/Vb, where the ratio Vf/Vb is the ratio of the content Vf of the organically modified silicone acrylate (F) to the content Vb of the organically modified silicone acrylate (B) in each active-energy-radiation-curable inkjet recording ink in the ink set.

**12.** The ink set according to Claim 11, wherein the ratio Vf/Vb of an active-energy-radiation-curable inkjet recording ink in the ink set to be ejected later onto a recording medium during image formation is larger than or equal to the ratio Vf/Vb of an active-energy-radiation-curable inkjet recording ink in the ink set to be ejected earlier, where the ratio Vf/Vb is the ratio of the content Vf of the organically modified silicone acrylate (F) to the content Vb of the organically modified silicone acrylate (B) in each active-energy-radiation-curable inkjet recording ink in the ink set.

FIG.1

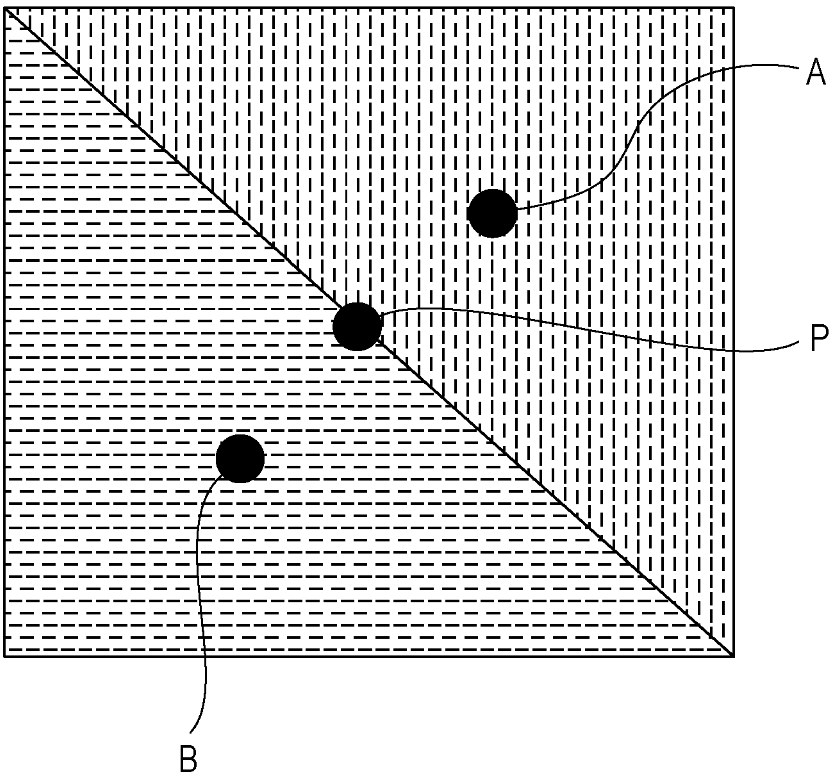

**INTERNATIONAL SEARCH REPORT**

International application No.
PCT/JP2012/077734

A. CLASSIFICATION OF SUBJECT MATTER
*C09D11/00*(2006.01)i, *B41J2/01*(2006.01)i, *B41M5/00*(2006.01)i

According to International Patent Classification (IPC) or to both national classification and IPC

B. FIELDS SEARCHED

Minimum documentation searched (classification system followed by classification symbols)
C09D11/00, B41J2/01, B41M5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | WO 2010/029016 A1 (AGFA GRAPHICS NV), 18 March 2010 (18.03.2010), claims; paragraphs [0034], [0064], [0069] to [0070], [0165]; tables 4 to 5 | 1-12 |
| X | WO 2010/029017 A1 (AGFA GRAPHICS NV), 18 March 2010 (18.03.2010), claims; paragraphs [0045], [0064], [0069] to [0070], [0156]; table 5 | 1-12 |
| X | JP 2011-502188 A (AGFA GRAPHICS NV), 20 January 2011 (20.01.2011), claims; paragraphs [0074], [0252] to [0261], [0322]; tables 22, 28, 31, 34, 36 | 1-12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 January, 2013 (15.01.13) | 29 January, 2013 (29.01.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/077734

C (Continuation). DOCUMENTS CONSIDERED TO BE RELEVANT

| Category* | Citation of document, with indication, where appropriate, of the relevant passages | Relevant to claim No. |
|---|---|---|
| X | JP 2001-525479 A (Xaar Technology Ltd.), 11 December 2001 (11.12.2001), claims; paragraphs [0012], [0017] to [0021] | 1-12 |
| P,X | JP 2012-193315 A (Seiko Epson Corp.), 11 October 2012 (11.10.2012), claims; paragraphs [0069] to [0070], [0116]; examples | 1-12 |
| P,X | JP 2012-167161 A (Seiko Epson Corp.), 06 September 2012 (06.09.2012), claims; paragraphs [0020] to [0030], [0051] to [0064]; examples | 1-12 |

Form PCT/ISA/210 (continuation of second sheet) (July 2009)

**INTERNATIONAL SEARCH REPORT**
Information on patent family members

International application No.
PCT/JP2012/077734

| | | |
|---|---|---|
| WO 2010/029016 A1 | 2010.03.18 | EP 2161290 A1<br>CN 102149731 A<br>AT 537195 T<br>ES 2374022 T |
| WO 2010/029017 A1 | 2010.03.18 | EP 2161264 A1<br>CN 102149704 A |
| JP 2011-502188 A | 2011.01.20 | US 2011/0124768 A1<br>EP 2053103 A1<br>WO 2009/053305 A1<br>DE 602007009698 D<br>AU 2008314722 A<br>CA 2701774 A<br>CN 101835855 A<br>AT 483773 T<br>ES 2352051 T |
| JP 2001-525479 A | 2001.12.11 | US 6593390 B1<br>GB 9725929 A<br>EP 1034228 A2<br>WO 1999/029787 A2<br>AU 1346299 A<br>CA 2310633 A<br>BR 9813371 A<br>CN 1301284 A |
| JP 2012-193315 A | 2012.10.11 | (Family: none) |
| JP 2012-167161 A | 2012.09.06 | (Family: none) |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010202814 A
- JP 2010138315 A
- JP 2006008998 A
- JP 2011057744 A